# EUROPEAN PATENT SPECIFICATION

(11) **EP 2 978 265 B1**
(45) Date of publication and mention of the grant of the patent: **13.02.2019**
(21) Application number: 15176120.2
(22) Date of filing: 09.07.2015
(51) Int. Cl.: H04W 48/16, H04W 12/04, H04W 76/11, H04W 48/20

(54) **METHOD AND APPARATUS FOR AUTOMATICALLY CONNECTING TO A WIRELESS NETWORK**
VERFAHREN UND VORRICHTUNG ZUM AUTOMATISCHEN ANSCHLUSS EINES DRAHTLOSEN NETZWERKS
PROCÉDÉ ET APPAREIL D'ASSEMBLAGE AUTOMATIQUE DE RÉSEAU SANS FIL

(30) Priority: 25.07.2014 CN 201410360907
(43) Date of publication of application: 27.01.2016
(73) Proprietor: Xiaomi Inc., Beijing 100085 (CN)
(72) Inventor: LI, Shen, 100085 Beijing (CN); WANG, Heng, 100085 Beijing (CN); XIANGLI, Fei, 100085 Beijing (CN)
(74) Representative: Sackin, Robert

(56) References cited:
- EP-A1- 2 320 702
- CN-A- 104 105 169
- US-A1- 2009 161 639
- US-A1- 2011 159 818
- US-A1- 2013 182 603
- US-B2- 8 743 778

## Description

### TECHNICAL FIELD

This disclosure relates to the field of communication technology, and particularly to a method and an apparatus for automatically connecting a wireless network.

### BACKGROUND

In the related arts, a terminal device is capable of storing a name and password of a wireless network to which the terminal device has connected, so that automatic connection can be performed using the stored password when the wireless network is detected for a next time. The wireless network includes a WIFI (Wireless Fidelity) network and various networks based on the IEEE (Institute of Electrical and Electronic Engineers) 802.11 protocol. When performing automatic connection using a stored password, it needs to determine whether a currently detected wireless network is the same as the previously connected one. A determination method in the related arts includes determining whether the names of the two wireless networks are the same, and if they are the same, determining that the currently detected wireless network is the same as the previously connected one.

However, many wireless networks share the same name. Incorrect determination may be made when, whether two wireless networks are the same, is determined by their name, resulting in unsuccessful automatic connection at the terminal device side. Normally, when automatic connection fails, boxes will keep popping up on the terminal device to prompt a user to input a password again, which is a disturbance to the user.

US patent No. US 8,743,778 discloses systems and methods for obtaining network credentials. A method comprises receiving, with a digital device, a network identifier from a network device, providing a first credential request including the network identifier to another digital device on a network, receiving a request for additional network information from the other digital device, providing a second credential request including additional network information to the other digital device, receiving a credential request response including network credentials from the other digital device, and providing the network credentials from the credential request response to a network device.

### SUMMARY

In order to overcome the problem in the related arts, the embodiments of this disclosure provide a method and an apparatus for automatically connecting a wireless network to improve the accuracy of determining whether a previously connected wireless network is the same as the currently detected one, to reduce the chance of unsuccessful automatic connection and to avoid disturbances to the user.

The invention is defined in the appended set of claims. The embodiments and/or examples of the following description which are not covered by the appended claims are considered as not being part of the present invention.

According to a first aspect of the embodiments of this disclosure, there is provided a method for automatically connecting a wireless network, the method comprising: when a wireless network connection state is disconnected and a first wireless network is detected, generating a first wireless network list based on names of currently searched surrounding wireless networks, wherein the first wireless network shares a same name with a second wireless network which has pre-stored connection information; matching and comparing the first wireless network list with a pre-stored second wireless network list to obtain a matching and comparing result, wherein the second wireless network list is a list of wireless networks corresponding to the second wireless network; and, in a case where the matching and comparing result satisfies a preset condition, sending a connection request to the first wireless network based on the pre-stored connection information of the second wireless network.

In an embodiment, the method for generating the second wireless network list may comprise: searching names of surrounding wireless networks when the second wireless network is connected; and generating a second wireless network list corresponding to the second wireless networks based on the searched names of surrounding wireless networks.

In an embodiment, the method may comprise: updating the second wireless network list based on the first wireless network list, after the connection request is sent to the first wireless network and connection succeeds.

This embodiment has the following advantageous effects: the stored second wireless network list can be improved by updating the same, and the matching and comparing result obtained by using the improved second wireless network list is more accurate, thereby increasing the accuracy for determining whether there is a same wireless network and reducing the chance of unsuccessful automatic connection.

In an embodiment, updating the second wireless network list based on the first wireless network list may comprise: adding each item of the first wireless network list, which is not included in the second wireless network list, into the second wireless network list; or replacing the second wireless network list with the first wireless network list.

This embodiment has the following advantageous effects: by combining the first and second wireless network lists, items in the second wireless network list can be continuously supplemented, thereby improving the second wireless network list; and by replacing the second wireless network list with the first wireless network list, the stored second wireless network list can be updated in real time.

In an embodiment, the method may comprise: storing the first wireless network list when the matching and comparing result does not satisfy the preset condition.

This embodiment has the following advantageous effect: when the matching and comparing result does not satisfy the preset condition, which means that the currently detected first wireless network is a newly discovered one relative to the second wireless networks and has its own corresponding wireless network list, the first wireless network list is stored for subsequent operations.

In an embodiment, when matching and comparing results of at least two second wireless networks satisfy the preset condition, sending the connection request to the first wireless network based on the pre-stored connection information of the second wireless network may comprise: sending connection requests to the first wireless network by using the connection information of the second wireless networks one by one until connection succeeds or the connection information of all the second wireless networks have been used; or sorting the at least two second wireless networks based on the matching and comparing results in a large-to-small order, and sending connection requests to the first wireless network by using the connection information of the second wireless networks one by one according to the sorted order until connection succeeds or the connection information of all the second wireless networks have been used.

This embodiment has the following advantageous effects: by sorting the second wireless networks, automatic connection is performed based on the connection passwords of the sorted second wireless networks, which reduces the time for automatic connection by trying connection passwords, reduces the operation time for automatic connection for the terminal device and saves resources of the terminal device.

In an embodiment, matching and comparing the first wireless network list with the pre-stored second wireless network list to obtain a matching and comparing result may comprise: determining a number of items in the first wireless network list each of which has a same name as one of those in the second wireless network list; and determining a proportion of the number of items in the first wireless network list each of which has a same name as one of those in the second wireless network list to a total number of items in the second wireless network list, and taking the proportion as the matching and comparing result corresponding to the second wireless network.

This embodiment has the following advantageous effects: compared with a matching and comparing result obtained by counting a number of items each of which has a same name in the first and second wireless network lists, the matching and comparing result obtained by the above manner of this embodiment can reflect the matching degree of the two wireless network lists more accurately, thereby improving the accuracy of determining about a same wireless network and reducing the chance of unsuccessful automatic connection.

According to a second aspect of the embodiments of this disclosure, there is provided an apparatus for automatically connecting a wireless network, the apparatus comprising: a detecting module configured to, when a wireless network connection state is disconnected and a first wireless network is detected, generate a first wireless network list based on names of currently searched surrounding wireless networks, wherein the first wireless network shares a same name with a second wireless network which has pre-stored connection information; a matching and comparing module configured to match and compare the first wireless network list with a pre-stored second wireless network list to obtain a matching and comparing result, wherein the second wireless network list is a list of wireless networks corresponding to the second wireless network; and a connecting module configured to, in a case where the matching and comparing result satisfies a preset condition, send a connection request to the first wireless network based on the pre-stored connection information of the second wireless network.

In an embodiment, the apparatus may comprise a generating module configured to search names of surrounding wireless networks when the second wireless network is connected, and to generate a second wireless network list corresponding to the second wireless networks based on the searched names of surrounding wireless networks.

In an embodiment, the apparatus may comprise an updating module configured to update the second wireless network list based on the first wireless network list, after the connection request is sent to the first wireless network and connection succeeds.

In an embodiment, the updating module may comprise: a first updating unit configured to add each item of the first wireless network list, which is not included in the second wireless network list, into the second wireless network list; or a second updating unit configured to replace the second wireless network list with the first wireless network list.

In an embodiment, the apparatus may comprise a storing module configured to store the first wireless network list when the matching and comparing result does not satisfy the preset condition.

In an embodiment, the connecting module may comprise: a first connecting unit configured to, when matching and comparing results of at least two second wireless networks satisfy the preset condition, send the connection request to the first wireless network based on the pre-stored connection information of the second wireless network until connection succeeds or the connection information of all the second wireless networks have been used; or a second connecting unit configured to, when matching and comparing results of at least two second wireless networks satisfy the preset condition, sort the at least two second wireless networks based on the matching and comparing results in a large-to-small order, and send connection requests to the first wireless network by using the connection information of the second wireless networks one by one until connection succeeds or the connection information of all the second wireless networks have been used.

In an embodiment, the matching and comparing module may comprise a matching and comparing unit configured to determine a number of items in the first wireless network list each of which has a same name as one of those in the second wireless network list, and determine a proportion of the number of items in the first wireless network list each of which has a same name as one of those in the second wireless network list to a total number of items in the second wireless network list, and take the proportion as the matching and comparing result corresponding to the second wireless network.

According to a third aspect of the embodiments of this disclosure, there is provided a device for automatically connecting a wireless network, the device comprising: a processor; and a memory configured to store instructions executable by the processor, wherein the processor is configured to: generate a first wireless network list based on names of currently searched surrounding wireless networks, when a wireless network connection state is disconnected and a first wireless network is detected, wherein the first wireless network shares a same name with a second wireless network which has pre-stored connection information; match and compare the first wireless network list with a pre-stored second wireless network list to obtain a matching and comparing result, wherein the second wireless network list is a list of wireless networks corresponding to the second wireless network; and send a connection request to the first wireless network based on the pre-stored connection information of the second wireless network, in a case where the matching and comparing result satisfies a preset condition.

According to a fourth aspect of the embodiments of this disclosure, there is provided a computer program, which when executing on a processor, performs the method according to the above first aspect.

The technical solutions of the embodiment of this disclosure have the following advantageous effects: by matching and comparing wireless network lists of wireless networks having the same name, automatic connection can be performed based on the matching and comparing result, thereby improving the accuracy of determining whether a previously connected wireless network is the same as the currently detected one, avoiding incorrect determination of different wireless networks having the same name as the same wireless network, reducing the chance of unsuccessful automatic connection and avoiding disturbances to the user.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flowchart showing a method for automatically connecting a wireless network according to an exemplary embodiment.
Fig. 2 is a flowchart showing a method for automatically connecting a wireless network according to a first exemplary embodiment.
Fig. 3 is a flowchart showing a method for automatically connecting a wireless network according to a second exemplary embodiment.
Fig. 4 is a block diagram illustrating an apparatus for automatically connecting a wireless network according to an exemplary embodiment.
Fig. 5 is a block diagram illustrating another apparatus for automatically connecting a wireless network according to an exemplary embodiment.
Fig. 6A is a block diagram illustrating another apparatus for automatically connecting a wireless network according to an exemplary embodiment.
Fig. 6B is a block diagram illustrating another apparatus for automatically connecting a wireless network according to an exemplary embodiment.
Fig. 7 is a block diagram illustrating another apparatus for automatically connecting a wireless network according to an exemplary embodiment.
Fig. 8A is a block diagram illustrating another apparatus for automatically connecting a wireless network according to an exemplary embodiment.
Fig. 8B is a block diagram illustrating another apparatus for automatically connecting a wireless network according to an exemplary embodiment.
Fig. 9 is a block diagram illustrating a device adapted to automatically connect a wireless network according to an exemplary embodiment.

### DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

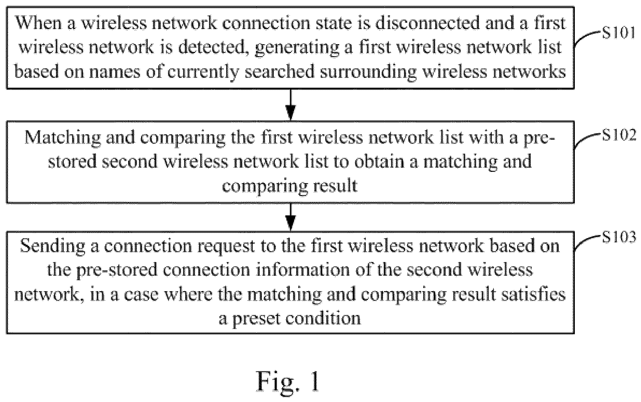

Fig. 1 is a flowchart showing a method for automatically connecting a wireless network according to an exemplary embodiment. As shown in Fig. 1, the method for automatically connecting a wireless network, which is applied to an apparatus or a terminal device, such as a cell phone, a tablet computer or a laptop computer respectively having a wireless network card, includes the following steps S101-S104.

In step S101, when a wireless network connection state is disconnected and a first wireless network is detected, a first wireless network list is generated based on names of currently searched surrounding wireless networks,
wherein the first wireless network shares a same name with a second wireless network which has pre-stored connection information.

In step S102, the first wireless network list is matched and compared with a pre-stored second wireless network list to obtain a matching and comparing result,
wherein the second wireless network list is a list of wireless networks corresponding to the second wireless network.

In an embodiment, generating the second wireless network list may comprise: searching names of surrounding wireless networks when the second wireless network is connected; and generating a second wireless network list corresponding to the second wireless networks based on the searched names of surrounding wireless networks.

For example, if a currently detected first wireless network has a name of D and a wireless network with the same name has been connected previously, the wireless network which has the same name D and has been connected previously is the second wireless network, whose connection information has been stored. The names of surrounding wireless networks are searched when the second wireless network is connected. A second wireless network list corresponding to the second wireless network is generated based on the searched names of surrounding wireless networks, and is identified as ListD2. The first wireless network list is identified as ListD1. As mentioned in step S102, the lists ListD1 and ListD2 are matched and compared to obtain a matching and comparing result corresponding to the second wireless network.

In an embodiment, step S102 may be implemented as steps A1-A2.

In step A1, it is determined a number of items in the first wireless network list each of which has a same name as one of those in the second wireless network list.

In step A2, it is determined a proportion of the number of items in the first wireless network list each of which has a same name as one of those in the second wireless network list to a total number of items in the second wireless network list, and the proportion is taken as the matching and comparing result corresponding to the second wireless network.

Compared with a matching and comparing result obtained by counting a number of items in the first wireless network list each of which has a same name as a name in the second wireless network list, the matching and comparing result obtained by the above manner of this embodiment can reflect the matching degree of the two wireless network lists more accurately, thereby improving the accuracy in subsequent determination of same wireless networks and reducing the chance of unsuccessful automatic connection.

The implementation manners in the above embodiments are illustrative only and do not exclude other implementation manners of step S102. For example, step S102 may be implemented as follows: it is determined a number of items in the first wireless network list each of which has a same name as one of those in the stored second wireless network list, and the determined number of items in the first wireless network list each of which has a same name as one of those in the second wireless network list is taken as the matching and comparing result corresponding to the second wireless network. Alternatively, step S102 may be implemented as below: it is determined a number of items in the first wireless network list each of which has a same name as one of those in the stored second wireless network list, it is determined a proportion of the number of items each of which has a same name to a total number of items in the second wireless network list, and the determined proportion is taken as the matching and comparing result corresponding to the second wireless network.

In step S103, in a case where the matching and comparing result satisfies a preset condition, a connection request is sent to the first wireless network based on the pre-stored connection information of the second wireless network.

In an embodiment, step S103 may be implemented as below: when a proportion obtained from the matching and comparing is greater than a preset proportion, it is determined that the matching and comparing result satisfies the preset condition.

For instance, the first and second wireless network lists are identified as lists ListD1 and ListD2 respectively. The lists ListD1 and ListD2 have 7 common items, and the list ListD2 has a total item number of 10. It can be determined that the matching and comparing result of the list ListD2 is 70% after matching and comparing the two lists. If the preset proportion is 60%, since the matching and comparing result of 70% is greater than this preset proportion, it can be determined that the matching and comparing result satisfies the preset condition.

When matching and comparing results of at least two second wireless networks satisfy the preset condition, step S103 may be implemented according to the following technical solution.

In an embodiment, step S103 may be implemented as below: connection requests are sent to the first wireless network by using the connection information of second wireless networks one by one whose matching and comparing result satisfies the preset condition until connection succeeds or the connection information of all the second wireless networks have been used.

In another embodiment, step S103 may be implemented as below: the second wireless networks whose matching and comparing result satisfies the preset condition are sorted based on the matching and comparing results in a large-to-small order; and connection requests are sent to the first wireless network by using the connection information of the second wireless networks one by one until connection succeeds or the connection information of all the second wireless networks have been used.

In addition, the implementation manners of this disclosure are not limited to the above technical solutions. When there are second wireless networks, steps S102-S103 may be implemented as below: the first wireless network list is matched and compared with a second wireless network list to obtain a matching and comparing result; if the matching and comparing result satisfies the preset condition, a connection request is sent to the first wireless network based on the connection information of the second wireless network; if the matching and comparing result does not satisfy the preset condition, the first wireless network list is matched and compared with a next second wireless network list, and the above mentioned operation is repeated, until connection succeeds or all the second wireless network lists are matched and compared.

To sum up, by matching and comparing the wireless network lists of wireless networks having the same name, automatic connection is performed based on the matching and comparing result, which improves the accuracy of determining whether a previously connected wireless network is the same as the currently detected one, decreases the chance of incorrect determination of different wireless networks having the same name as the same wireless network, reduces the chance of unsuccessful automatic connection and avoids disturbances to the user.

In an embodiment, the second wireless network list is updated using the first wireless network list.

The method further comprises: the second wireless network list is updated based on the first wireless network list, after the connection request is sent to the first wireless network and connection succeeds, wherein updating the second wireless network list based on the first wireless network list may be implemented such that each item of the first wireless network list, which is not included in the second wireless network list, is added into the second wireless network list.

For instance, the list ListD2 stored in step S103 is the second wireless network list, and the list ListD1 stored in step S103 is the first wireless network list. Each item in the list ListD1, which is not included in the list ListD2, is added into the list ListD2. Thus, the stored list ListD2 is improved. The matching and comparing result obtained by using the improved list ListD2 is more accurate, thereby increasing the accuracy for determining whether there is a same wireless network and reducing the chance of unsuccessful automatic connection.

The implementation manners in the above embodiments are illustrative only and do not exclude other implementation manners for updating the second wireless network list based on the first wireless network list. For example, updating the second wireless network list based on the first wireless network list may be implemented as below: the second wireless network list is replaced with the first wireless network list. By replacing the second wireless network list with the first wireless network list, the stored first wireless network list can be updated in real time.

In another embodiment, the method may further comprise: storing the first wireless network list when the matching and comparing result does not satisfy the preset condition.

The first wireless network list stored in the above step may be used in subsequent operations.

For instance, when the matching and comparing result does not satisfy the preset condition in step S103, automatic connection operation will not be started, and the terminal device may pop up a prompting box to prompt input of the connection password.

When connection to the first wireless network using the connection password succeeds, the stored first wireless network list is changed into a second wireless network list.

When connection to the first wireless network using the connection password fails, the stored first wireless network list is a wireless network list to be authenticated, and the currently detected first wireless network is a wireless network to be authenticated. When a wireless network detected at a second time has the same name with the above mentioned wireless network to be authenticated, the wireless network list to be authenticated is matched and compared with the wireless network list of the wireless network detected at the second time. When the matching and comparing result satisfies the preset condition, automatic connection will not be started, and the terminal device may pop up a prompting box to prompt input of the connection password. When connection to the wireless network detected at the second time using the connection password succeeds, the wireless network list to be authenticated is changed into a second wireless network list, and the wireless network to be authenticated becomes a second wireless network, with the input connection password as connection information. In addition, the above mentioned wireless network list to be authenticated may be updated based on a wireless network list of the wireless network detected at the second time.

To sum up, when the matching and comparing result does not satisfy the preset condition, which means that the currently detected first wireless network is not the same as the second wireless network though having the same name as the second wireless network, the currently detected first wireless network is a new one and has its own corresponding wireless network list; therefore, the first wireless network list is stored for subsequent operations.

The following embodiments are provided to explain the technical solutions of the embodiments of this disclosure and are useful for understanding the invention.

### Embodiment 1

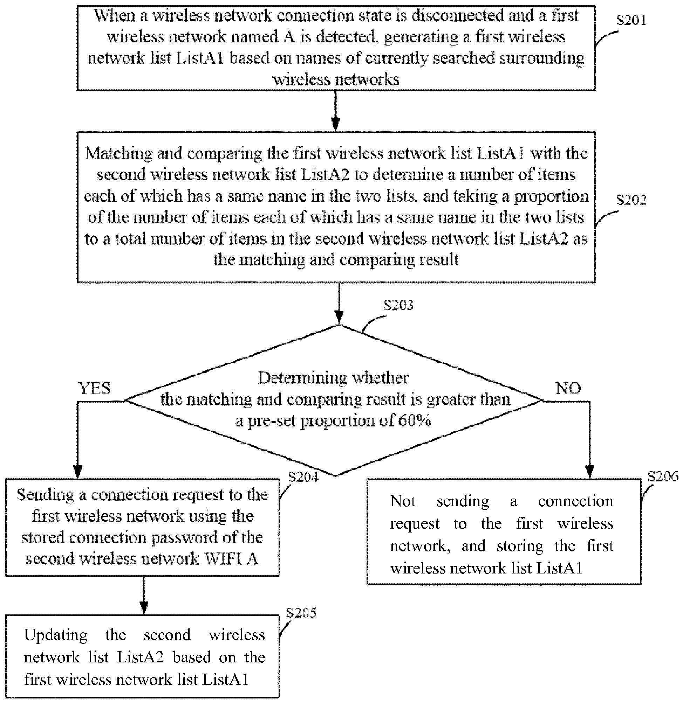

By using the method provided by the embodiments of this disclosure, the first embodiment allows a terminal device or apparatus, such as a cell phone, to be automatically connected to a wireless network. The terminal device is applied in the following scenario. The terminal device has been successfully connected to a second wireless network named A and identified as WIFI A. When the second wireless network is connected, a second wireless network list ListA2 is established based on the names of searched wireless networks. For example, the second wireless network list ListA2 includes 5 wireless networks, namely, WIFI A, WIFI B, WIFI C, WIFI D and WIFI E. The terminal device stores the name WIFI A of the second wireless network, the connection password of WIFI A and the second wireless network list ListA2. As shown in Fig. 2, the terminal device performs the following operations.

In step S201, when a wireless network connection state is disconnected and a first wireless network named A is detected, a first wireless network list ListA1 is generated based on names of currently searched surrounding wireless networks.

In step S202, the first wireless network list ListA1 is matched and compared with the second wireless network list ListA2 to determine a number of items each of which has a same name in the two lists, and a proportion of the number of items each of which has a same name in the two lists to a total number of items in the second wireless network list ListA2 is taken as the matching and comparing result.

In step S203, it is determined whether the matching and comparing result is greater than a pre-set proportion of 60%. If it is greater than 60%, step S204 will be performed. If it is smaller than or equals to 60%, step S206 will be performed.

In step S204, a connection request is sent to the first wireless network using the stored connection password of the second wireless network WIFI A.

In step S205, the second wireless network list ListA2 is updated based on the first wireless network list ListA1.

In step S206, if the matching and comparing result is not greater than the pre-set proportion of 60%, no connection request is sent to the first wireless network, and the first wireless network list ListA1 is stored.

In the first embodiment, by matching and comparing wireless network lists of wireless networks having the same name , automatic connection can be performed based on the matching and comparing result, thereby improving the accuracy of determining whether a previously connected wireless network is the same as the currently detected one, avoiding incorrect determination of different wireless networks having the same name as the same wireless network, reducing the chance of unsuccessful automatic connection and avoiding disturbances to the user.

### Embodiment 2

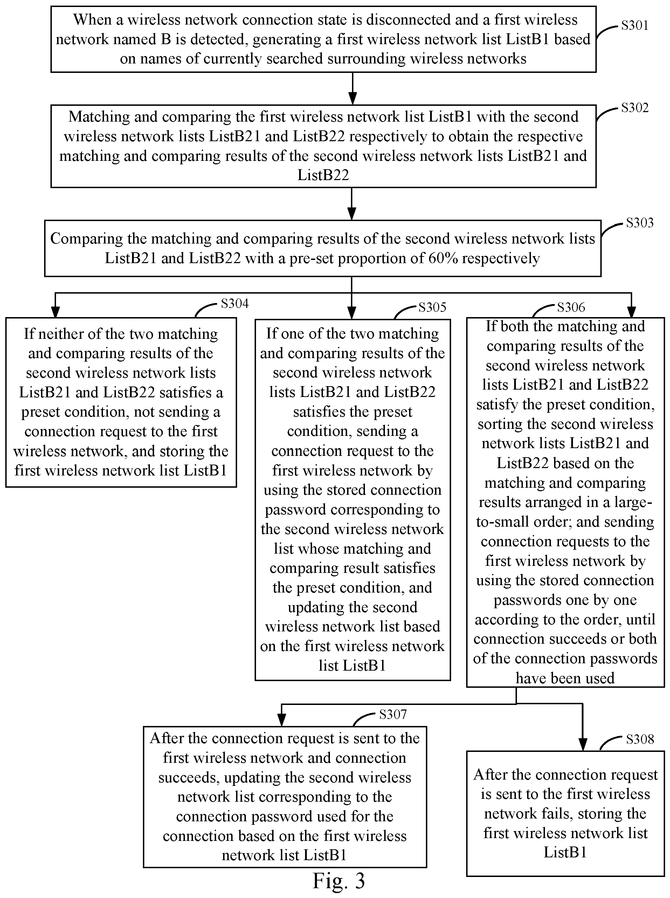

By using the method provided by the embodiments of this disclosure, the second embodiment allows a terminal device or apparatus, such as a cell phone, to be automatically connected to a wireless network. The terminal device is applied in the following scenario. The terminal device has stored two connection passwords corresponding to a wireless network named B, the two connection passwords including a connection password PasswordB1 and a connection password PasswordB2. The terminal device has also stored a second wireless network list ListB21 corresponding to the connection password PasswordB1 and a second wireless network list ListB22 corresponding to the connection password PasswordB2. As shown in Fig. 3, the terminal device performs the following operations.

In step S301, when a wireless network connection state is disconnected and a first wireless network named B is detected, a first wireless network list ListB1 is generated based on names of currently searched surrounding wireless networks.

In step S302, the first wireless network list ListB1 is matched and compared with the second wireless network lists ListB21 and ListB22 respectively to obtain the respective matching and comparing results of the second wireless network lists ListB21 and ListB22.

The matching and comparing result of the second wireless network list ListB21 is a proportion of the number of items in the first wireless network list ListB1 each of which has a same name as one of those in the second wireless network list ListB21 to a total number of items in the second wireless network list ListB21.

The matching and comparing result of the second wireless network list ListB22 is a proportion of the number of items in the first wireless network list ListB1 each of which has a same name as one of those in the second wireless network list ListB22 to a total number of items in the second wireless network list ListB22.

In step S303, the matching and comparing results of the second wireless network lists ListB21 and ListB22 are compared with a pre-set proportion of 60% respectively.

In step S304, if neither of the two matching and comparing results of the second wireless network lists ListB21 and ListB22 satisfies a preset condition, no connection request is sent to the first wireless network, and the first wireless network list ListB1 is stored.

In step S305, if one of the two matching and comparing results of the second wireless network lists ListB21 and ListB22 satisfies the preset condition, a connection request is sent to the first wireless network by using the stored connection password corresponding to the second wireless network list whose matching and comparing result satisfies the preset condition, and the second wireless network list is updated based on the first wireless network list ListB1.

For example, in a case where the matching and comparing result of the second wireless network list ListB21 satisfies the preset condition, in step S305, a connection request is sent to the first wireless network by using the stored connection password PasswordB1 corresponding to the second wireless network list ListB21, and the second wireless network list ListB21 is updated based on the first wireless network list ListB1.

In step S306, if both the matching and comparing results of the second wireless network lists ListB21 and ListB22 satisfy the preset condition, the second wireless network lists ListB21 and ListB22 are sorted based on the matching and comparing results arranged in a large-to-small order; and connection requests are sent to the first wireless network by using the stored connection passwords one by one according to the order, until connection succeeds or both of the connection passwords have been used.

For instance, assuming that the matching and comparing results of the second wireless network lists ListB21 and ListB22 obtained in step S302 are 80% and 70% respectively. The second wireless network lists ListB21 and ListB22 are sorted. First, a connection request is sent to the first wireless network by using the connection password PasswordB1 corresponding to the second wireless network list ListB21. If the connection succeeds, the subsequent step will be performed. If it fails, a connection request will be sent to the first wireless network by using the connection password PasswordB2 corresponding to the second wireless network list ListB22.

In step S307, after the connection request is sent to the first wireless network and connection succeeds, the second wireless network list corresponding to the connection password used for the connection is updated based on the first wireless network list ListB1.

In step S308, after the connection request is sent to the first wireless network fails, the first wireless network list ListB1 is stored.

In the second embodiment, by matching and comparing wireless network lists of wireless networks having the same name, automatic connection can be performed based on the matching and comparing result, thereby improving the accuracy of determining whether a previously connected wireless network is the same as the currently detected one, avoiding incorrect determination of different wireless networks having the same name as the same wireless network, reducing the chance of unsuccessful automatic connection and avoiding disturbances to the user.

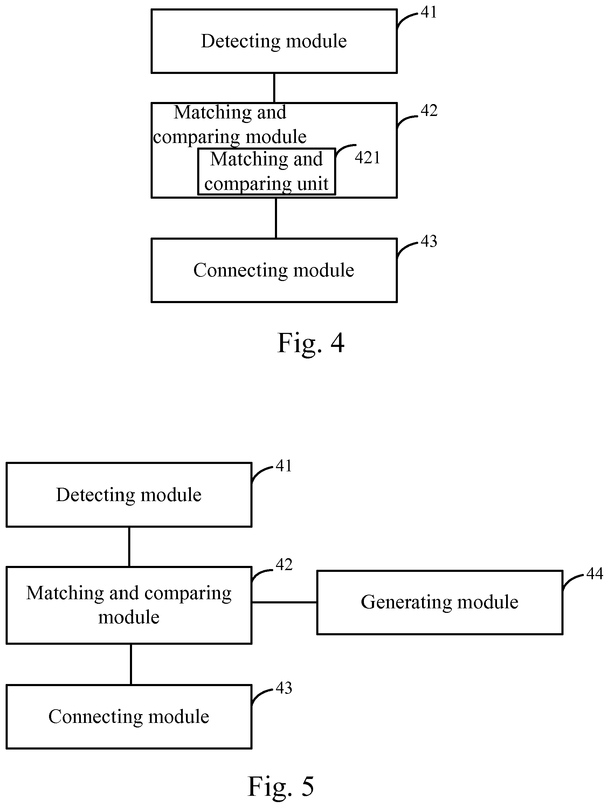

Fig. 4 is a block diagram illustrating an apparatus for automatically connecting a wireless network according to an exemplary embodiment. As shown in Fig. 4, the apparatus for automatically connecting a wireless network comprises: a detecting module 41 configured to, when a wireless network connection state is disconnected and a first wireless network is detected, generate a first wireless network list based on names of currently searched surrounding wireless networks, wherein the first wireless network shares a same name with a second wireless network which has pre-stored connection information; a matching and comparing module 42 configured to match and compare the first wireless network list with a pre-stored second wireless network list to obtain a matching and comparing result, wherein the second wireless network list is a list of wireless networks corresponding to the second wireless network; and a connecting module 43 configured to, in a case where the matching and comparing result satisfies a preset condition, send a connection request to the first wireless network based on the pre-stored connection information of the second wireless network.

In an embodiment, as shown in Fig. 5, the apparatus may comprise: a generating module 44 configured to search names of surrounding wireless networks when the second wireless network is connected, and to generate a second wireless network list corresponding to the second wireless networks based on the searched names of surrounding wireless networks.

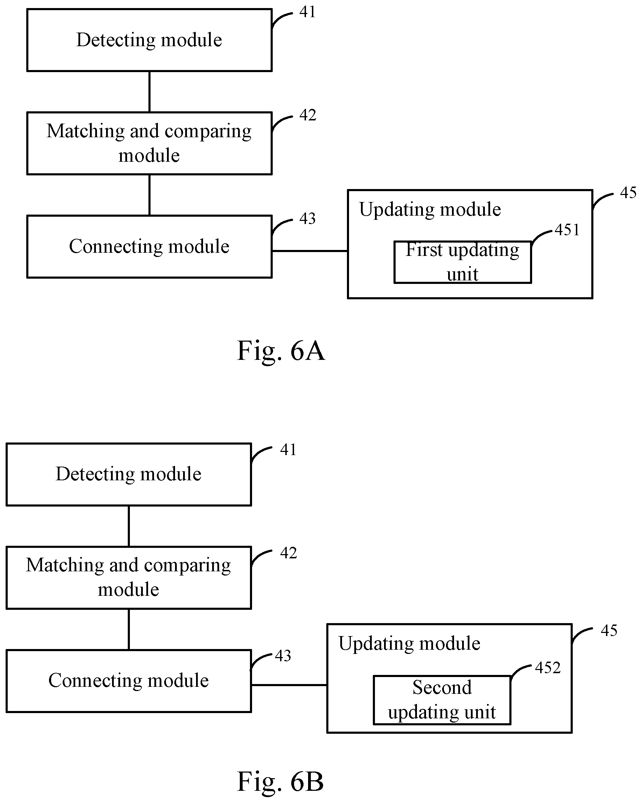

In another embodiment, as shown in Figs. 6A and 6B, the apparatus may comprise: an updating module 45 configured to update the second wireless network list based on the first wireless network list, after the connection request is sent to the first wireless network and connection succeeds.

In another embodiment, as shown in Figs. 6A and 6B, the updating module 45 may comprise: a first updating unit 451 configured to add each item of the first wireless network list, which is not included in the second wireless network list, into the second wireless network list; or a second updating unit 452 configured to replace the second wireless network list with the first wireless network list.

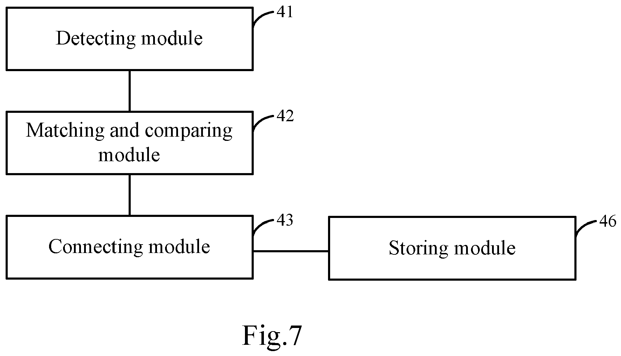

In another embodiment, as shown in Fig. 7, the apparatus may comprise: a storing module 46 configured to store the first wireless network list when the matching and comparing result does not satisfy the preset condition.

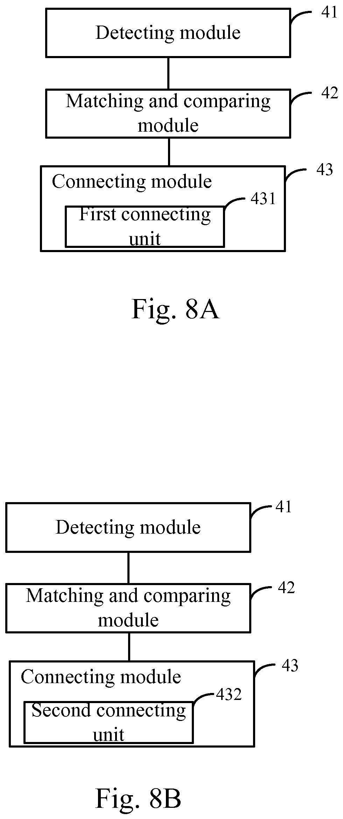

In another embodiment, as shown in Figs. 8A and 8B, the connecting module 43 may comprise: a first connecting unit 431 configured to, when matching and comparing results of at least two second wireless networks satisfy the preset condition, send connection requests to the first wireless network based on the pre-stored connection information of the second wireless networks one by one until connection succeeds or the connection information of all the second wireless networks have been used; or a second connecting unit 432 configured to, when matching and comparing results of at least two second wireless networks satisfy the preset condition, sort the at least two second wireless networks based on the matching and comparing results in a large-to-small order, and send connection requests to the first wireless network by using the connection information of the second wireless networks one by one until connection succeeds or the connection information of all the second wireless networks have been used.

In another embodiment, as shown in Fig. 4, the matching and comparing module 42 may comprise: a matching and comparing unit 421 configured to determine a number of items in the first wireless network list each of which has a same name as one of those in the second wireless network list, and determine a proportion of the number of items in the first wireless network list each of which has a same name as one of those in the second wireless network list to a total number of items in the second wireless network list, and take the proportion as the matching and comparing result corresponding to the second wireless network.

By matching and comparing wireless network lists of wireless networks having the same name, automatic connection can be performed by the apparatus for automatically connecting a wireless network provided in this embodiment based on the matching and comparing result, thereby improving the accuracy of determining whether a previously connected wireless network is the same as the currently detected one, avoiding incorrect determination of different wireless networks having the same name as the same wireless network, reducing the chance of unsuccessful automatic connection and avoiding disturbances to the user.

With respect to the apparatuses in the above embodiments, the specific manners for performing operations for individual modules therein have been described in detail in the embodiments regarding the method for automatically connecting a wireless network, which will not be elaborated herein.

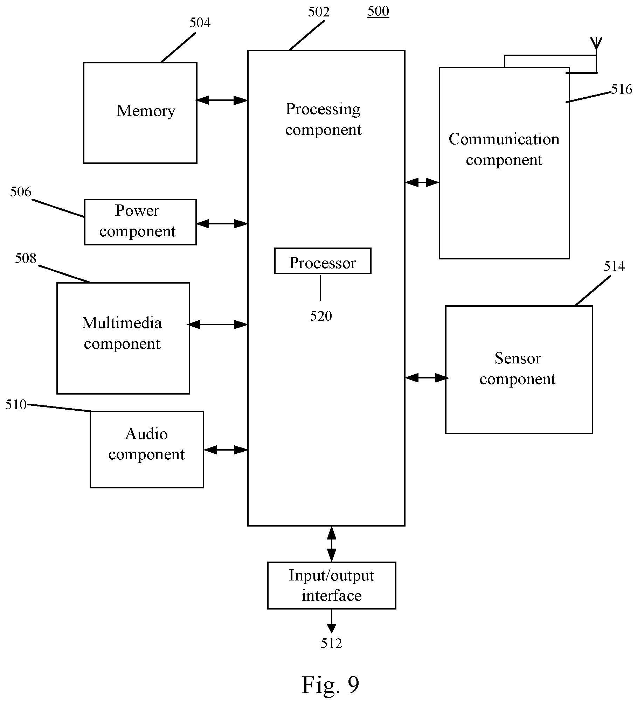

Fig. 9 is a block diagram illustrating a device 500 adapted to automatically connect a wireless network and applicable to a terminal device, according to an exemplary embodiment. For example, the device 500 may be a mobile phone, a computer, a digital broadcast terminal, a messaging device, a gaming console, a tablet, a medical device, exercise equipment, a personal digital assistant, and the like.

Referring to Fig. 9, the device 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the device 500, such as the operations associated with display, telephone calls, data communications, camera operations, and recording operations. The processing component 502 may include one or more processors 520 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the device 500. Examples of such data include instructions for any applications or methods operated on the device 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the device 500. The power component 506 may include a power management system, one or more power sources, and any other components associated with the generation, management, and distribution of power in the device 500.

The multimedia component 508 includes a screen providing an output interface between the device 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and the rear camera may receive an external multimedia datum while the device 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone ("MIC") configured to receive an external audio signal when the device 500 is in an operation mode, such as a call mode, a recording mode, and a voice recognition mode. The received audio signal may be further stored in the memory 804 or transmitted via the communication component 516. In some embodiments, the audio component 810 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the device 500. For instance, the sensor component 514 may detect an open/closed status of the device 500, relative positioning of components, e.g., the display and the keypad, of the device 500, a change in position of the device 500 or a component of the device 500, a presence or absence of user contact with the device 500, an orientation or an acceleration/deceleration of the device 500, and a change in temperature of the device 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate communication, wired or wirelessly, between the device 500 and other devices. The device 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as included in the memory 504, executable by the processor 520 in the device 500, for performing the above-described methods. For example, the non-transitory computer-readable storage medium may be a ROM, a RAM, a CD-ROM, a magnetic tape, a floppy disc, an optical data storage device, and the like.

An apparatus for automatically connecting a wireless network comprises: a processor; and a memory configured to store instructions executable by the processor, wherein the processor is configured to: generate a first wireless network list based on names of currently searched surrounding wireless networks, when a wireless network connection state is disconnected and a first wireless network is detected, wherein the first wireless network shares a same name with a second wireless network which has pre-stored connection information; match and compare the first wireless network list with a pre-stored second wireless network list to obtain a matching and comparing result, wherein the second wireless network list is a list of wireless networks corresponding to the second wireless network; and send a connection request to the first wireless network based on the pre-stored connection information of the second wireless network, in a case where the matching and comparing result satisfies a preset condition.

The processor is further configured to: search names of surrounding wireless networks when the second wireless network is connected; and generate a second wireless network list corresponding to the second wireless networks based on the searched names of surrounding wireless networks.

The processor is further configured to: update the second wireless network list based on the first wireless network list, after the connection request is sent to the first wireless network and connection succeeds.

The processor is further configured to: add each item of the first wireless network list, which is not included in the second wireless network list, into the second wireless network list; or replace the second wireless network list with the first wireless network list.

The processor is further configured to: store the first wireless network list when the matching and comparing result does not satisfy the preset condition.

The processor is further configured to: when matching and comparing results of at least two second wireless networks satisfy the preset condition, send connection requests to the first wireless network by using the connection information of the second wireless networks one by one until connection succeeds or the connection information of all the second wireless networks have been used; or sort the at least two second wireless networks based on the matching and comparing results in a large-to-small order, and send connection requests to the first wireless network by using the connection information of the second wireless networks one by one until connection succeeds or the connection information of all the second wireless networks have been used.

The processor is further configured to: determine a number of items in the first wireless network list each of which has a same name as one of those in the second wireless network list; and determine a proportion of the number of items in the first wireless network list each of which has a same name as one of those in the second wireless network list to a total number of items in the second wireless network list, and take the proportion as the matching and comparing result corresponding to the second wireless network.

A non-transitory computer-readable storage medium having stored therein instructions that, when executed by a processor of a mobile terminal, causes the mobile terminal to perform a method for automatically connecting a wireless network, the method comprising: when a wireless network connection state is disconnected and a first wireless network is detected, generating a first wireless network list based on names of currently searched surrounding wireless networks, wherein the first wireless network shares a same name with a second wireless network which has pre-stored connection information; matching and comparing the first wireless network list with a pre-stored second wireless network list to obtain a matching and comparing result, wherein the second wireless network list is a list of wireless networks corresponding to the second wireless network; and, in a case where the matching and comparing result satisfies a preset condition, sending a connection request to the first wireless network based on the pre-stored connection information of the second wireless network.

Generating the second wireless network list comprises: searching names of surrounding wireless networks when the second wireless network is connected; and generating a second wireless network list corresponding to the second wireless networks based on the searched names of surrounding wireless networks.

The method may further comprise: updating the second wireless network list based on the first wireless network list, after the connection request is sent to the first wireless network and connection succeeds.

Updating the second wireless network list based on the first wireless network list comprises: adding each item of the first wireless network list, which is not included in the second wireless network list, into the second wireless network list; or replacing the second wireless network list with the first wireless network list.

The method may further comprise: storing the first wireless network list when the matching and comparing result does not satisfy the preset condition.

When matching and comparing results of at least two second wireless networks satisfy the preset condition, sending the connection request to the first wireless network based on the pre-stored connection information of the second wireless network comprises: sending connection requests to the first wireless network by using the connection information of the second wireless networks one by one until connection succeeds or the connection information of all the second wireless networks have been used; or sorting the at least two second wireless networks based on the matching and comparing results in a large-to-small order, and sending connection requests to the first wireless network by using the connection information of the second wireless networks one by one according to the sorted order until connection succeeds or the connection information of all the second wireless networks have been used.

Matching and comparing the first wireless network list with the pre-stored second wireless network list to obtain a matching and comparing result comprises: determining a number of items in the first wireless network list each of which has a same name as one of those in the second wireless network list; and determining a proportion of the number of items in the first wireless network list each of which has a same name as one of those in the second wireless network list to a total number of items in the second wireless network list, and taking the proportion as the matching and comparing result corresponding to the second wireless network.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for automatically connecting a wireless network, the method being executed by an apparatus or a terminal device which pre-stores one or more wireless networks,
wherein each pre-stored wireless network is associated with a wireless network and comprises a wireless network name, connection information and a wireless network list,
wherein the connection information comprises a connection password corresponding to the wireless network, the method comprising:
when a wireless network connection state of the apparatus or terminal device is disconnected and a first wireless network is detected by the apparatus or terminal device, generating (S301) a first wireless network list based on names of currently searched surrounding wireless networks ;
determining second wireless networks as all the pre-stored wireless networks that have the same name as the first wireless network;
determining a second network list for each second wireless network as the wireless network list associated with the second wireless network in the pre-stored wireless networks;
matching and comparing (S302) the first wireless network list with second wireless network lists to obtain matching and comparing results, wherein:
for each second wireless network, the matching and comparing result is a proportion of the number of items between the first wireless network list, each of which has a same name as one of those in the associated second wireless network list, to a total number of items of the associated second wireless network list, and a result per second wireless network is obtained;
in a case where any of the matching and comparing results is greater than a preset proportion, the apparatus or terminal device sending (S303) a connection request to the first wireless network based on the connection information of the pre-stored wireless network; wherein, the sending comprises:
sorting (S306) the second wireless networks whose matching and comparing result is greater than the preset threshold based on the matching and comparing results in a large-to-small order, and sending (S305, S306) connection requests to the first wireless network by using the connection passwords associated with the sorted second wireless networks in the pre-stored wireless networks one by one according to the sorted order until connection succeeds or the connection passwords associated with the sorted second wireless networks in the pre-stored wireless networks have been used, wherein, the method further comprises: in case that for a connection request sent, connection succeeded, updating (S307) the pre-stored wireless networks based on the first wireless network list, wherein,
the updating comprises: replacing the wireless network list of the pre-stored wireless network whose connection password has been used for successfully connecting to the first wireless network with the first wireless network list;
in case that no matching and comparison result is greater than the preset proportion or for all connection requests sent, connection did not succeed, storing (S304, S308) the first wireless network list.

2. The method according to claim 1, further comprising: when the wireless network connection state of the apparatus or terminal is connected to a wireless network with a connection password, searching names of surrounding wireless networks and storing a wireless network associated with the connected wireless network in the pre-stored wireless networks, wherein the wireless network comprises the name of the connected wireless network, the connection password and the surrounding wireless networks respectively as the wireless network name, connection password and wireless network list.

3. The method according to any preceding claim, wherein, matching and comparing the first wireless network list with each second wireless network list to obtain matching and comparing results comprises:
determining a number of items in the first wireless network list each of which has a same name as one of those in the second wireless network list; and
determining a proportion of the number of items in the first wireless network list each of which has a same name as one of those in the second wireless network list to a total number of items in the second wireless network list, and taking the proportion as the matching and comparing results corresponding to the second wireless network.

4. An apparatus for automatically connecting a wireless network, the apparatus pre-storing one or more wireless networks,
wherein each pre-stored wireless network is associated with a wireless network and comprises a wireless network name, connection information and a wireless network list,
wherein the connection information comprises a connection password corresponding to the wireless network, and the apparatus comprising:
a detecting module (41) configured to, when a wireless network connection state of the apparatus is disconnected and a first wireless network is detected, generate (S301) a first wireless network list based on names of currently searched surrounding wireless networks, determine second wireless networks as all the pre-stored wireless networks that have the same name as the first wireless network, and determine a second network list for each second wireless network as the wireless network list associated with the second wireless network in the pre-stored wireless network;
a matching and comparing module (42) configured to, for each second wireless network, match and compare (S302) the first wireless network list with second wireless network lists to obtain matching and comparing results, wherein: the matching and comparing result is a proportion of the number of items between the first wireless network list, each of which has a same name as one of those in the associated second wireless network list, to a total number of items of the associated second wireless network list, and a result per second wireless network is obtained; and
a connecting module (43) configured to, in a case where any of the matching and comparing results is greater than a preset proportion, send (S303) a connection request to the first wireless network based on the connection information of the pre-stored wireless network; wherein, the connecting module comprises:
a connecting unit (432) configured to, when matching and comparing results of at least two second wireless networks satisfy the preset condition, sort (S306) the second wireless networks whose matching and comparing result is greater than the preset threshold based on the matching and comparing results in a large-to-small order, and send (S305, S306) connection requests to the first wireless network by using the connection passwords associated with the sorted second wireless networks in the pre-stored wireless networks one by one according to the sorted order until connection succeeds or the connection passwords associated with the sorted second wireless networks in the pre-stored wireless networks have been used, wherein, the apparatus further comprises:
an updating module (45) configured to, in a case that for a connection request sent, connection succeeded, update (S307) the pre-stored wireless networks based on the first wireless network list, wherein
the updating module comprises:
an updating unit (452) configured to replace the wireless network list of the pre-stored wireless network whose connection password has been used for successfully connecting to the first wireless network with the first wireless network list; and
a storing module (46) configured to, in case that no matching and comparison result is greater than the preset proportion or for all connection requests sent, connection did not succeed, store (S304, S308) the first wireless network list.

5. The apparatus according to claim 4, wherein, the apparatus further comprises:
a generating module (44) configured to, when the wireless network connection state of the apparatus or terminal is connected to a wireless network with a connection password, search names of surrounding wireless networks and store a wireless network associated with the connected wireless network in the pre-stored wireless networks, wherein the wireless network comprises the name of the connected wireless network, the connection password and the surrounding wireless networks respectively as the wireless network name, connection password and wireless network list.

6. The apparatus according to claim 4 or claim 5, wherein,
the matching and comparing module (42) comprises:
a matching and comparing unit (421) configured to determine a number of items in the first wireless network list each of which has a same name as one of those in the second wireless network list, and determine a proportion of the number of items in the first wireless network list each of which has a same name as one of those in the second wireless network list to a total number of items in the second wireless network list, and take the proportion as the matching and comparing result corresponding to the second wireless network.

7. A computer program, which when executing on a processor (520), performs the method according to any of claims 1 to 3.

## Patentansprüche

1. Verfahren zum automatischen Verbinden eines drahtlosen Netzwerks, wobei das Verfahren durch eine Vorrichtung oder ein Endgerät ausgeführt wird, das ein oder mehr drahtlose Netzwerke vorspeichert,
wobei jedes vorgespeicherte drahtlose Netzwerk einem drahtlosen Netzwerk zugeordnet ist und einen Namen eines drahtlosen Netzwerks, Verbindungsinformationen und eine Drahtlosnetzwerkliste aufweist,
wobei die Verbindungsinformationen ein Verbindungskennwort aufweisen, das dem drahtlosen Netzwerk entspricht, wobei das Verfahren Folgendes aufweist:
wenn ein Drahtlosnetzwerkverbindungszustand der Vorrichtung oder des Endgeräts unterbrochen wird und ein erstes drahtloses Netzwerk durch die Vorrichtung oder das Endgerät erkannt wird, Generieren (S301) einer ersten Drahtlosnetzwerkliste auf Basis von Namen aktuell abgesuchter umgebender drahtloser Netzwerke;
Bestimmen zweiter drahtloser Netzwerke als alle der vorgespeicherten drahtlosen Netzwerke, die den gleichen Namen wie das erste drahtlose Netzwerk haben;
Bestimmen einer zweiten Netzwerkliste für jedes zweite drahtlose Netzwerk als die Drahtlosnetzwerkliste, die dem zweiten drahtlosen Netzwerk in den vorgespeicherten drahtlosen Netzwerken zugeordnet ist;
Abgleichen und Vergleichen (S302) der ersten Drahtlosnetzwerkliste mit zweiten Drahtlosnetzwerklisten zum Erhalten von Abgleichs- und Vergleichsergebnissen, wobei:
für jedes zweite drahtlose Netzwerk das Abgleichs- und Vergleichsergebnis ein Verhältnis der Anzahl von Einträgen zwischen der ersten Drahtlosnetzwerkliste, die jeweils den gleichen Namen wie einer derjenigen in der zugeordneten zweiten Drahtlosnetzwerkliste haben, zu einer Gesamtzahl von Einträgen der zugeordneten zweiten Drahtlosnetzwerkliste ist und ein Ergebnis pro zweitem drahtlosem Netzwerk erhalten wird;
in einem Fall, in dem eines der Abgleichs- und Vergleichsergebnisse größer als ein vorgegebenes Verhältnis ist, Senden (S303) einer Verbindungsanforderung durch die Vorrichtung oder das Endgerät an das erste drahtlose Netzwerk auf Basis der Verbindungsinformationen des vorgespeicherten drahtlosen Netzwerks; wobei das Senden Folgendes aufweist:
Sortieren (S306) der zweiten drahtlosen Netzwerke, deren Abgleichs- und Vergleichsergebnis größer ist als der vorgegebene Schwellenwert, auf Basis der Abgleichs- und Vergleichsergebnisse in einer Reihenfolge von groß nach klein und Senden (S305, S306) von Verbindungsanforderungen an das erste drahtlose Netzwerk durch Verwenden der den sortierten zweiten drahtlosen Netzwerken in den vorgespeicherten drahtlosen Netzwerken zugeordneten Verbindungskennworte nacheinander gemäß der sortierten Reihenfolge, bis die Verbindung erfolgreich ist oder die den sortierten zweiten drahtlosen Netzwerken in den vorgespeicherten drahtlosen Netzwerken zugeordneten Verbindungskennworte verwendet worden sind, wobei das Verfahren ferner Folgendes aufweist: im Fall, dass für eine gesendete Verbindungsanforderung die Verbindung erfolgreich war, Aktualisieren (S307) der vorgespeicherten drahtlosen Netzwerke auf Basis der ersten Drahtlosnetzwerkliste, wobei
das Aktualisieren Folgendes aufweist: Ersetzen der Drahtlosnetzwerkliste des vorgespeicherten drahtlosen Netzwerks, dessen Verbindungskennwort zum erfolgreichen Verbinden mit dem ersten drahtlosen Netzwerk mit der ersten Drahtlosnetzwerkliste verwendet wurde;
im Fall, dass kein Abgleichs- und Vergleichsergebnis größer ist als das vorgegebene Verhältnis oder für alle gesendeten Verbindungsanforderungen die Verbindung nicht erfolgreich war, Speichern (S304, S308) der ersten Drahtlosnetzwerkliste.

2. Verfahren nach Anspruch 1, das ferner Folgendes aufweist: wenn der Drahtlosnetzwerkverbindungszustand der Vorrichtung oder des Endgeräts mit einem Verbindungskennwort mit einem drahtlosen Netzwerk verbunden ist, Suchen nach Namen umgebender drahtloser Netzwerke und Speichern eines drahtlosen Netzwerks, das dem verbundenen drahtlosen Netzwerk zugeordnet ist, in den vorgespeicherten drahtlosen Netzwerken, wobei das drahtlose Netzwerk den Namen des verbundenen drahtlosen Netzwerks, das Verbindungskennwort und die umgebenden drahtlosen Netzwerke jeweils als den Namen des drahtlosen Netzwerks, das Verbindungskennwort bzw. die Drahtlosnetzwerkliste aufweist.

3. Verfahren nach einem der vorhergehenden Ansprüche, wobei das Abgleichen und Vergleichen der ersten Drahtlosnetzwerkliste mit jeder zweiten Drahtlosnetzwerkliste zum Erhalten von Abgleichs- und Vergleichsergebnissen Folgendes aufweist:
Bestimmen einer Anzahl von Einträgen in der ersten Drahtlosnetzwerkliste, die jeweils einen gleichen Namen wie einer von denen in der zweiten Drahtlosnetzwerkliste haben; und
Bestimmen eines Verhältnisses der Anzahl von Einträgen in der ersten Drahtlosnetzwerkliste, die jeweils einen gleichen Namen wie einer von denen in der zweiten Drahtlosnetzwerkliste haben, zu einer Gesamtzahl von Einträgen in der zweiten Drahtlosnetzwerkliste und Nehmen des Verhältnisses als die Abgleichs- und Vergleichsergebnisse, die dem zweiten drahtlosen Netzwerk entsprechen.

4. Vorrichtung zum automatischen Verbinden eines drahtlosen Netzwerks, wobei die Vorrichtung ein oder mehr drahtlose Netzwerke vorspeichert,
wobei jedes vorgespeicherte drahtlose Netzwerk einem drahtlosen Netzwerk zugeordnet ist und einen Namen eines drahtlosen Netzwerks, Verbindungsinformationen und eine Drahtlosnetzwerkliste aufweist,
wobei die Verbindungsinformationen ein Verbindungskennwort aufweisen, das dem drahtlosen Netzwerk entspricht, wobei die Vorrichtung Folgendes aufweist:
ein Erkennungsmodul (41), das konfiguriert ist zum, wenn ein Drahtlosnetzwerkverbindungszustand der Vorrichtung unterbrochen wird und ein erstes drahtloses Netzwerk erkannt wird, Generieren (S301) einer ersten Drahtlosnetzwerkliste auf Basis von Namen aktuell abgesuchter umgebender drahtloser Netzwerke, Bestimmen zweiter drahtloser Netzwerke als alle der vorgespeicherten drahtlosen Netzwerke, die den gleichen Namen wie das erste drahtlose Netzwerk haben, und Bestimmen einer zweiten Netzwerkliste für jedes zweite drahtlose Netzwerk als die Drahtlosnetzwerkliste, die dem zweiten drahtlosen Netzwerk in dem vorgespeicherten drahtlosen Netzwerk zugeordnet ist;
ein Abgleichs- und Vergleichsmodul (42), das konfiguriert ist zum Abgleichen und Vergleichen (S302) der ersten Drahtlosnetzwerkliste mit zweiten Drahtlosnetzwerklisten zum Erhalten von Abgleichs- und Vergleichsergebnissen für jedes zweite drahtlose Netzwerk, wobei: das Abgleichs- und Vergleichsergebnis ein Verhältnis der Anzahl von Einträgen zwischen der ersten Drahtlosnetzwerkliste, die jeweils den gleichen Namen wie einer derjenigen in der zugeordneten zweiten Drahtlosnetzwerkliste haben, zu einer Gesamtzahl von Einträgen der zugeordneten zweiten Drahtlosnetzwerkliste ist und ein Ergebnis pro zweitem drahtlosem Netzwerk erhalten wird; und
ein Verbindungsmodul (43), das konfiguriert ist zum Senden (S303) einer Verbindungsanforderung an das erste drahtlose Netzwerk auf Basis der Verbindungsinformationen des vorgespeicherten drahtlosen Netzwerks in einem Fall, in dem eines der Abgleichs- und Vergleichsergebnisse größer als ein vorgegebenes Verhältnis ist, wobei das Verbindungsmodul Folgendes aufweist:
eine Verbindungseinheit (432), die konfiguriert ist zum, wenn Abgleichs- und Vergleichsergebnisse von wenigstens zwei zweiten drahtlosen Netzwerken die vorgegebene Bedingung erfüllen, Sortieren (S306) der zweiten drahtlosen Netzwerke, deren Abgleichs- und Vergleichsergebnis größer ist als der vorgegebene Schwellenwert, auf Basis der Abgleichs- und Vergleichsergebnisse in einer Reihenfolge von groß nach klein und Senden (S305, S306) von Verbindungsanforderungen an das erste drahtlose Netzwerk durch Verwenden der den sortierten zweiten drahtlosen Netzwerken in den vorgespeicherten drahtlosen Netzwerken zugeordneten Verbindungskennworte nacheinander gemäß der sortierten Reihenfolge, bis die Verbindung erfolgreich ist oder die den sortierten zweiten drahtlosen Netzwerken in den vorgespeicherten drahtlosen Netzwerken zugeordneten Verbindungskennworte verwendet worden sind, wobei die Vorrichtung ferner Folgendes aufweist:
ein Aktualisierungsmodul, das konfiguriert ist zum Aktualisieren (S307) der vorgespeicherten drahtlosen Netzwerke auf Basis der ersten Drahtlosnetzwerkliste in einem Fall, in dem für eine gesendete Verbindungsanforderung die Verbindung erfolgreich war, wobei
das Aktualisierungsmodul Folgendes aufweist:
eine Aktualisierungseinheit (452), die konfiguriert ist zum Ersetzen der Drahtlosnetzwerkliste des vorgespeicherten drahtlosen Netzwerks, dessen Verbindungskennwort zum erfolgreichen Verbinden mit dem ersten drahtlosen Netzwerk mit der ersten Drahtlosnetzwerkliste verwendet wurde; und
ein Speicherungsmodul (46), das konfiguriert ist zum Speichern (S304, S308) der ersten Drahtlosnetzwerkliste im Fall, dass kein Abgleichs- und Vergleichsergebnis größer ist als das vorgegebene Verhältnis oder für alle gesendeten Verbindungsanforderungen die Verbindung nicht erfolgreich war.

5. Vorrichtung nach Anspruch 4, wobei die Vorrichtung ferner Folgendes aufweist:
ein Generierungsmodul (44), das konfiguriert ist zum Suchen nach Namen umgebender drahtloser Netzwerke und Speichern eines drahtlosen Netzwerks, das dem verbundenen drahtlosen Netzwerk zugeordnet ist, in den vorgespeicherten drahtlosen Netzwerken, wenn der Drahtlosnetzwerkverbindungszustand der Vorrichtung oder des Endgeräts mit einem Verbindungskennwort mit einem drahtlosen Netzwerk verbunden ist, wobei das drahtlose Netzwerk den Namen des verbundenen drahtlosen Netzwerks, das Verbindungskennwort und die umgebenden drahtlosen Netzwerke jeweils als den Namen des drahtlosen Netzwerks, das Verbindungskennwort bzw. die Drahtlosnetzwerkliste aufweist.

6. Vorrichtung nach Anspruch 4 oder Anspruch 5, wobei
das Abgleichs- und Vergleichsmodul (42) Folgendes aufweist:
eine Abgleichs- und Vergleichseinheit (421), die konfiguriert ist zum Bestimmen einer Anzahl von Einträgen in der ersten Drahtlosnetzwerkliste, die jeweils einen gleichen Namen wie einer von denen in der zweiten Drahtlosnetzwerkliste haben; und Bestimmen eines Verhältnisses der Anzahl von Einträgen in der ersten Drahtlosnetzwerkliste, die jeweils einen gleichen Namen wie einer von denen in der zweiten Drahtlosnetzwerkliste haben, zu einer Gesamtzahl von Einträgen in der zweiten Drahtlosnetzwerkliste und Nehmen des Verhältnisses als das Abgleichs- und Vergleichsergebnis, das dem zweiten drahtlosen Netzwerk entspricht.

7. Computerprogramm, das bei Ausführung in einem Prozessor (520) das Verfahren nach einem der Ansprüche 1 bis 3 durchführt.

## Revendications

1. Procédé de connexion automatique d'un réseau sans fil, le procédé étant exécuté par un appareil ou un dispositif périphérique qui prémémorise un ou plusieurs réseaux sans fil, dans lequel chaque réseau sans fil prémémorisé est associé à un réseau sans fil et comprend un nom de réseau sans fil, des informations de connexion et une liste de réseaux sans fil, dans lequel les informations de connexion comprennent un mot de passe de connexion correspondant au réseau sans fil, le procédé comprenant :
quand un état de connexion de réseau sans fil de l'appareil ou du dispositif périphérique est déconnecté et un premier réseau sans fil est détecté par l'appareil ou le dispositif périphérique, la génération (S301) d'une première liste de réseaux sans fil en fonction de noms de réseaux sans fil périphériques présentement recherchés ;
la détermination de seconds réseaux sans fil en tant que tous les réseaux sans fil prémémorisés qui ont le même nom que le premier réseau sans fil ;
la détermination d'une seconde liste de réseaux pour chaque second réseau sans fil en tant que liste de réseaux sans fil associée au second réseau sans fil dans les réseaux sans fil prémémorisés ;
la mise en correspondance et la comparaison (S302) de la première liste de réseaux sans fil avec la seconde liste de réseaux sans fils pour obtenir des résultats de mise en correspondance et comparaison, dans lequel :
pour chaque second réseau sans fil, le résultat de mise en correspondance et comparaison est une proportion du nombre d'articles entre la première liste de réseaux sans fil, qui ont chacun un même nom que l'un de ceux dans la seconde liste de réseaux sans fil associée,
par rapport à un nombre total d'articles de la seconde liste de réseaux sans fil associée, et un résultat par second réseau sans fil est obtenu ;
dans le cas où l'un quelconque des résultats de mise en correspondance et comparaison est supérieur à une proportion prédéfinie, l'envoi (S303) par l'appareil ou le dispositif périphérique d'une demande de connexion au premier réseau sans fil en fonction des informations de connexion du réseau sans fil prémémorisé ; l'envoi comprenant :
le tri (S306) des seconds réseaux sans fil dont le résultat de mise en correspondance et comparaison est supérieur au seuil prédéfini en fonction des résultats de mise en correspondance et comparaison dans un ordre du plus grand au plus petit, et l'envoi (S305, S306) de demandes de connexion au premier réseau sans fil en utilisant les mots de passe de connexion associés aux seconds réseaux sans fil triés dans les réseaux sans fil prémémorisés un par un conformément à l'ordre de triage jusqu'à ce que la connexion aboutisse ou que les mots de passe de connexion associés aux seconds réseaux sans fil triés dans les réseaux sans fil prémémorisés aient été utilisés, dans lequel, le procédé comprenant en outre : dans le cas où pour une demande de connexion envoyée, la connexion a abouti,
l'actualisation (S307) des réseaux sans fil prémémorisés en fonction de la première liste de réseaux sans fil, dans lequel,
l'actualisation comprend : le remplacement de la liste de réseaux sans fil du réseau sans fil prémémorisé dont le mot de passe de connexion a été utilisé pour faire aboutir la connexion au premier réseau sans fil avec la première liste de réseaux sans fil ;
dans le cas où aucun résultat de mise en correspondance et de comparaison n'est supérieur à la proportion prédéfinie ou dans le cas où pour toutes les demandes de connexion envoyées,
la connexion n'a pas abouti, la mémorisation (S304, S308) de la première liste de réseaux sans fil.

2. Procédé selon la revendication 1, comprenant en outre : quand l'état de connexion de réseau sans fil de l'appareil ou du périphérique est connecté à un réseau sans fil avec un mot de passe de connexion, la recherche de noms de réseaux sans fil périphériques et la mémorisation d'un réseau sans fil associé au réseau sans fil connecté dans les réseaux sans fil prémémorisés, dans lequel le réseau sans fil comprend le nom du réseau sans fil connecté, le mot de passe de connexion et les réseaux sans fil périphériques respectivement en tant que les nom de réseau sans fil, mot de passe de connexion et liste de réseaux sans fil.

3. Procédé selon l'une quelconque des revendications précédentes, dans lequel, la mise en correspondance et la comparaison de la première liste de réseaux sans fil avec chaque seconde liste de réseaux sans fil pour obtenir des résultats de mise en correspondance et comparaison comprend :
la détermination d'un nombre d'articles dans la première liste de réseaux sans fil qui ont chacun un même nom que l'un de ceux dans la seconde liste de réseaux sans fil ; et
la détermination d'une proportion du nombre d'articles dans la première liste de réseaux sans fil qui ont chacun un même nom que l'un de ceux dans la seconde liste de réseaux sans fil par rapport à un nombre total d'articles dans la seconde liste de réseaux sans fil, et
l'utilisation de la proportion en tant que résultats de mise en correspondance et comparaison correspondant au second réseau sans fil.

4. Appareil de connexion automatique d'un réseau sans fil, l'appareil prémémorisant un ou plusieurs réseaux sans fil,
dans lequel chaque réseau sans fil prémémorisé est associé à un réseau sans fil et comprend un nom de réseau sans fil, des informations de connexion et une liste de réseaux sans fil, dans lequel les informations de connexion comprennent un mot de passe de connexion correspondant au réseau sans fil, et l'appareil comprenant :
un module de détection (41) configuré pour, quand un état de connexion de réseau sans fil de l'appareil est déconnecté et un premier réseau sans fil est détecté, générer (S301) une première liste de réseaux sans fil en fonction de noms de réseaux sans fil périphériques présentement recherchés, déterminer des seconds réseaux sans fil en tant que tous les réseaux sans fil prémémorisés qui ont le même nom que le premier réseau sans fil, et déterminer une seconde liste de réseaux pour chaque second réseau sans fil en tant que liste de réseaux sans fil associée au second réseau sans fil dans le réseau sans fil prémémorisé ;
un module de mise en correspondance et comparaison (42) configuré pour, pour chaque second réseau sans fil, mettre en correspondance et comparer (S302) la première liste de réseaux sans fil avec des secondes listes de réseaux sans fil pour obtenir des résultats de mise en correspondance et comparaison, dans lequel : le résultat de mise en correspondance et comparaison est une proportion du nombre d'articles entre la première liste de réseaux sans fil, qui ont chacun un même nom que l'un de ceux dans la seconde liste de réseaux sans fil associée, par rapport à un nombre total d'articles de la seconde liste de réseaux sans fil associée, et un résultat par second réseau sans fil est obtenu ; et
un module de connexion (43) configuré pour, dans le cas où l'un quelconque des résultats de mise en correspondance et comparaison est supérieur à une proportion prédéfinie,
envoyer (S303) une demande de connexion au premier réseau sans fil en fonction des informations de connexion du réseau sans fil prémémorisé ; le module de connexion comprenant :
une unité de connexion (432) configurée pour, quand des résultats de mise en correspondance et comparaison d'au moins deux seconds réseaux sans fil satisfont la condition prédéfinie, trier (S306) les seconds réseaux sans fil dont le résultat de mise en correspondance et comparaison est supérieur au seuil prédéfini en fonction des résultats de mise en correspondance et comparaison dans un ordre du plus grand au plus petit, et envoyer (S305, S306) des demandes de connexion au premier réseau sans fil en utilisant les mots de passe de connexion associés aux seconds réseaux sans fil triés dans les réseaux sans fil prémémorisés un par un conformément à l'ordre trié jusqu'à ce que la connexion aboutisse ou que les mots de passe de connexion associés aux seconds réseaux sans fil triés dans les réseaux sans fil prémémorisés aient été utilisés , l'appareil comprenant en outre :
un module d'actualisation (45) configuré pour, dans le cas où pour une demande de connexion envoyée, la connexion a abouti, actualiser (S307) les réseaux sans fil prémémorisés en fonction de la première liste de réseaux sans fil,
le module d'actualisation comprenant :
une unité d'actualisation (452) configurée pour remplacer la liste de réseaux sans fil du réseau sans fil prémémorisé dont le mot de passe de connexion a été utilisé pour faire aboutir la connexion au premier réseau sans fil avec la première liste de réseaux sans fil ; et un module de mémorisation (46) configuré pour, dans le cas où aucun résultat de mise en correspondance et comparaison n'est supérieur à la proportion prédéfinie ou pour toutes les demandes de connexion envoyées, la connexion n'a pas abouti, mémoriser (S304, S308) la première liste de réseaux sans fil.

5. Appareil selon la revendication 4, l'appareil comprenant en outre :
un module de génération (44) configuré pour, quand l'état de connexion de réseau sans fil de l'appareil ou du périphérique est connecté à un réseau sans fil avec un mot de passe de connexion, rechercher des noms de réseaux sans fil périphériques et mémoriser un réseau sans fil associé au réseau sans fil connecté dans les réseaux sans fil prémémorisés, dans lequel le réseau sans fil comprend le nom du réseau sans fil connecté, le mot de passe de connexion et les réseaux sans fil périphériques respectivement en tant que nom de réseau sans fil, mot de passe de connexion et liste de réseaux sans fil.

6. Appareil selon la revendication 4 ou la revendication 5, dans lequel
le module de mise en correspondance et comparaison (42) comprend :
une unité de mise en correspondance et comparaison (421) configurée pour déterminer un nombre d'articles dans la première liste de réseaux sans fil qui ont chacun un même nom que l'un de ceux dans la seconde liste de réseaux sans fil, et déterminer une proportion du nombre d'articles dans la première liste de réseaux sans fil qui ont chacun un même nom que l'un de ceux dans la seconde liste de réseaux sans fil à un nombre total d'articles dans la seconde liste de réseaux sans fil, et utiliser la proportion en tant que résultat de mise en correspondance et comparaison correspondant au second réseau sans fil.

7. Programme informatique, lequel, à son exécution sur un processeur (520), met en oeuvre le procédé selon l'une quelconque des revendications 1 à 3.
